# FASCICULE DE BREVET EUROPEEN

(11) **EP 3 770 697 B1**
(45) Date de publication et mention de la délivrance du brevet: **30.08.2023**
(21) Numéro de dépôt: 19188535.9
(22) Date de dépôt: 26.07.2019
(51) Int. Cl.: G04B 31/02, G04B 31/06, G04B 31/004

(54) **PROCEDE DE FABRICATION D'UNE PIERRE BISEAUTEE, NOTAMMENT POUR UN MOUVEMENT D'HORLOGERIE**
VERFAHREN ZUR HERSTELLUNG EINES ABGESCHRÄGTEN STEINS, INSBESONDERE FÜR UHRWERK
METHOD FOR MANUFACTURING A BEVELLED STONE, IN PARTICULAR FOR A CLOCK MOVEMENT

(43) Date de publication de la demande: 27.01.2021
(73) Titulaire: Comadur S.A., 2400 Le Locle (CH)
(72) Inventeur: BESUTTI, Bruno, 25140 Charquemont (FR); RETROUVEY, Sébastien, 39380 Chissey sur Loue (FR); MIDOL, Sébastien, 25430 Sancey (FR)
(74) Mandataire: ICB SA

(56) Documents cités:
- EP-A1- 2 778 801
- EP-A1- 3 483 665
- JP-A- 2003 080 514

## Description

### Domaine de l'invention

L'invention porte sur un procédé de fabrication d'une pierre biseautée pour un mouvement d'horlogerie.

L'invention porte aussi sur un système de fabrication permettant la mise en oeuvre du procédé.

### Arrière-plan de l'invention

Dans l'état de la technique de l'horlogerie, les pierres de type rubis ou saphir, sont notamment utilisées pour former des contre-pivots ou des éléments de guidage, appelés coussinets, dans des pièces d'horlogerie. Ces contre-pivots et éléments de guidage sont destinés à entrer en contact avec des pivots afin de rendre ces derniers mobiles en rotation et ce, avec un frottement minimal. Ainsi, ils forment, par exemple, tout ou partie d'un palier d'un axe monté en rotation. Les éléments de guidage comprennent généralement un trou traversant pour y insérer l'axe du pivot.

En principe, on utilise des pierres synthétiques dans les mouvements horlogers. On connait en particulier le procédé de type Verneuil pour fabriquer des pierres de type monocristalline. Il existe aussi les pierres de type poly-cristalline, que l'on fabrique par pressage d'un précurseur en vue de l'obtention d'un corps vert de la future pierre à partir d'un outil de pressage. Les pierres sont ensuite usinées pour obtenir une forme finie aux dimensions désirées.

En particulier, concernant les éléments de guidage en pierre polycristalline, l'outil de pressage est par exemple pourvu d'un fil participant à l'édification d'une ébauche de trou. Les pierres de type monocristallines sont d'abord percées au laser pour obtenir l'ébauche de trou. La dimension finale du trou est obtenue par la suite grâce à l'usinage.

Les pierres sont généralement dimensionnées pour être positionnées dans le logement d'un bloc de palier. Il existe notamment les paliers amortisseurs qui permettent d'absorber les chocs.

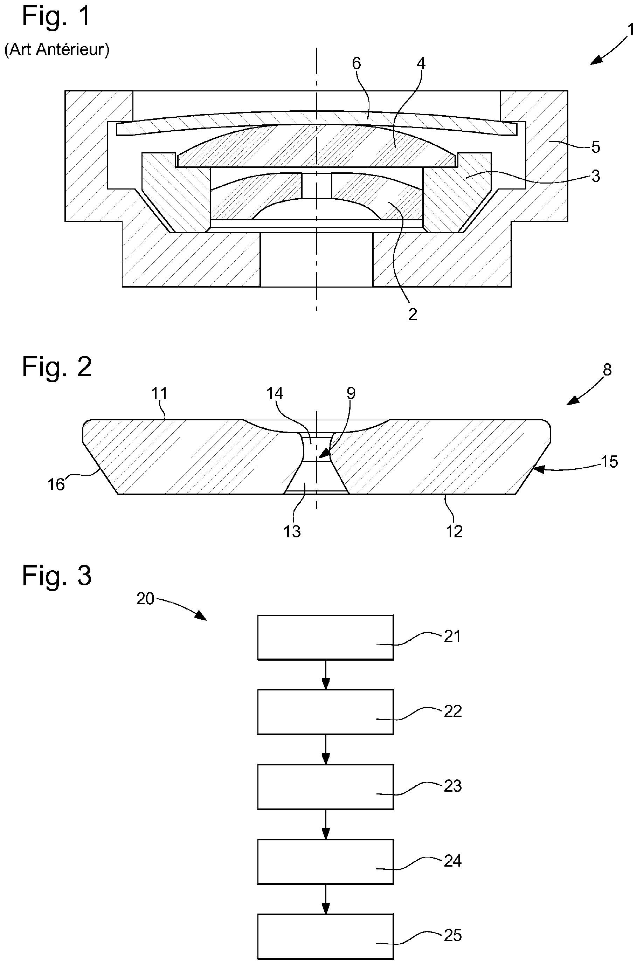

La configuration d'un palier amortisseur de choc 1 conventionnel est représentée par la figure 1. Une pierre bombée olivée 2 formant un élément de guidage axial pour le pivot, qui est appelée communément coussinet, est chassée dans un support de palier 3 appelé communément chaton, sur lequel est montée une pierre contre-pivot 4. Le chaton 3 est maintenu en appui contre le fond d'un bloc de palier 5 par des moyens élastiques, généralement un ressort amortisseur 6, agencé pour exercer une contrainte axiale sur la partie supérieure de la pierre contre-pivot 4. Un tel palier amortisseur permet d'absorber les chocs selon l'axe longitudinal du pivot, l'ensemble formé du chaton, de la pierre bombée, et de la pierre contre-pivot, pouvant se déplacer grâce au ressort amortisseur 6.

Le chaton 3 comporte en outre une paroi externe évasée agencée en correspondance avec une paroi interne évasée disposée à la périphérie du fond du bloc de palier 5. Il existe également des variantes selon lesquelles le chaton comporte une paroi externe présentant une surface de forme convexe, c'est-à-dire bombée. Ainsi, le palier amortisseur permet d'absorber les chocs radiaux, grâce aux parois évasées du chaton et du fond du bloc de palier 5. En effet, l'ensemble peut se déplacer radialement et axialement de façon simultanée.

Le document EP 2 778 801 A1 divulgue un procédé de fabrication et aussi un système de fabrication d'une pierre pour applications horlogères.

Le système de fabrication dans le document JP 2003 080514 mentionne des nervures de séparation de pierres synthétiques lors de la fabrication à partir d'un corps vert en forme de bande.

Cependant, on souhaite avoir une pierre unique capable de former à la fois l'élément de guidage et le chaton pour simplifier la disposition des éléments et améliorer la résistance aux chocs. Pour cela, il est nécessaire d'obtenir une pierre avec une paroi périphérique au moins en partie évasée. Or, les procédés actuels d'usinage sont compliqués à mettre en oeuvre pour y arriver.

### Résumé de l'invention

Le but de la présente invention est de pallier en tout ou partie les inconvénients cités précédemment en proposant un procédé de fabrication d'une pierre munie d'une face périphérique au moins en partie évasée, afin de pouvoir être insérée dans un bloc de palier amortisseur tel que décrit précédemment Dans ce contexte, un tel procédé de fabrication est répétable et ce, sans engendrer un quelconque endommagement de la pierre ou encore du système de fabrication de cette pierre.

A cet effet, l'invention porte sur un procédé de fabrication d'une pierre biseautée, notamment pour une pièce d'horlogerie. Le procédé est remarquable en ce qu'il comporte les étapes suivantes :
- réalisation d'un précurseur à partir d'un mélange d'au moins un matériau en poudre avec un liant ;
- pressage du précurseur, à l'aide d'une matrice supérieure et d'une matrice inférieure comprenant une nervure saillante afin de former un corps vert,
- frittage dudit corps vert afin de former un corps de la future pierre dans ledit au moins un matériau, le corps comprenant une face périphérique et une face inférieure munie d'une rainure, et
- usinage du corps comportant une sous-étape de rabotage de la face périphérique jusqu'à la rainure de manière à ce qu'une paroi interne de la rainure forme au moins une partie évasée de la face périphérique de la pierre,

Ainsi, un tel procédé permet de fabriquer aisément une pierre biseautée munie d'une face périphérique au moins une partie évasée, la pierre étant de préférence de type poly-cristal. Une telle pierre peut ainsi être insérée dans un bloc de palier ayant une forme correspondant à la face évasée, notamment pour absorber les chocs latéraux.

Selon un mode de réalisation particulier de l'invention, l'usinage comprend une sous-étape de creusement d'une creusure dans la face supérieure du corps.

Selon un mode de réalisation particulier de l'invention, l'usinage comprend une sous-étape de taille de la face supérieure du corps, afin d'obtenir une face supérieure donnant à la pierre une épaisseur prédéterminée.

Selon un mode de réalisation particulier de l'invention, le pressage comprend le creusement d'une ébauche de trou au moyen d'un poinçon de la matrice inférieure.

Selon un mode de réalisation particulier de l'invention, la rainure est réalisée pour être circulaire et/ou centrée sur la face inférieure de la pierre.

Selon un mode de réalisation particulier de l'invention, la nervure saillante et la rainure ont une section sensiblement triangulaire dont l'un des côtés formera la partie évasée de la face périphérique de la pierre, après le rabotage.

Selon un mode de réalisation particulier de l'invention, la rainure comprend une face interne et une face externe, la face externe étant éliminée lors du rabotage.

Selon un mode de réalisation particulier de l'invention, la face interne est conservée lors du rabotage de manière à former la partie évasée de la face périphérique.

Selon un mode de réalisation particulier de l'invention, l'étape pressage est réalisée par rapprochement des matrices supérieure et inférieure dans un carter.

Selon un mode de réalisation particulier de l'invention, l'étape frittage comporte une pyrolyse.

Selon un mode de réalisation particulier de l'invention, le procédé comporte une étape de finition de la pierre, par exemple un rodage et/ou un brossage et/ou un polissage.

Selon un mode de réalisation particulier de l'invention, le matériau en poudre est à base de céramique et comporte au moins un oxyde métallique, un nitrure métallique ou un carbure métallique.

Selon un mode de réalisation particulier de l'invention, le matériau en poudre à base de céramique comporte de l'oxyde d'aluminium.

Selon un mode de réalisation particulier de l'invention, le matériau en poudre à base de céramique comporte en outre de l'oxyde de chrome.

L'invention porte aussi sur un système de fabrication d'une pierre mettant en oeuvre le procédé selon l'invention. Le système est remarquable en en ce qu'il comprend :
- un dispositif de réalisation d'un précurseur à partir d'un mélange d'au moins un matériau en poudre avec un liant ;
- un dispositif de pressage du précurseur comprenant des matrices supérieure et inférieure agencées mobile dans un carter contribuant à former un corps vert de la future pierre, la matrice inférieure comprenant une nervure saillante ;
- un dispositif de frittage dudit corps vert ; et
- un dispositif d'usinage d'un corps de la future pierre.

Selon un mode de réalisation particulier de l'invention, la nervure saillante est sensiblement circulaire et/ou centrée sur la matrice inférieure.

Selon un mode de réalisation particulier de l'invention, la nervure saillante a une section sensiblement triangulaire.

### Description sommaire des dessins

D'autres particularités et avantages ressortiront clairement de la description qui en est faite ci-après, à titre indicatif et nullement limitatif, en référence aux dessins annexés, dans lesquels :
- la figure 1 représente schématiquement une section transversale d'un palier amortisseur de choc selon un mode de réalisation connu de l'état de la technique ;
- la figure 2 est une représentation d'une pierre obtenue avec le procédé selon l'invention ;
- la figure 3 un logigramme relatif au procédé de fabrication d'une pierre selon l'invention ;
- la figure 4 est une représentation schématique d'une partie du corps vert obtenue après l'étape de pressage du procédé selon l'invention ;
- la figure 5 est une représentation schématique d'une partie de la pierre après une première sous-étape d'usinage du procédé selon l'invention ;
- la figure 6 est une représentation schématique d'une partie de la pierre après une deuxième sous-étape d'usinage du procédé selon l'invention;
- la figure 7 est une représentation schématique d'une partie de la pierre après une troisième sous-étape d'usinage du procédé selon l'invention ;
- la figure 8 est une représentation schématique d'un système de fabrication d'une pierre selon de l'invention ;
- la figure 9 est une vue schématique d'un dispositif de pressage du système selon l'invention ; et
- la figure 10 est une vue schématique d'une matrice inférieure du dispositif de pressage du système selon l'invention.

### Description détaillée des modes de réalisation préférés

Comme expliqué ci-dessus, l'invention se rapporte à un procédé de fabrication d'une pierre susceptible de former un élément de guidage d'une pièce d'horlogerie. La pierre est par exemple destinée à entrer en contact avec un pivot afin de rendre ce dernier mobile en rotation avec un frottement minimal. On comprend donc que la présente invention permet notamment de réaliser une pierre pouvant former tout ou partie d'un palier d'un axe monté en rotation.

La figure 2 est un exemple de pierre biseautée 8 obtenue grâce au procédé selon l'invention. Avantageusement, la pierre 8 est traversée par un trou 9 destiné à recevoir un pivot, également appelé tourillon. La pierre 8 comporte, une face supérieure 11 et une face inférieure 12 dont l'une comprend un élément fonctionnel, ici un cône 13, communiquant avec le trou traversant 9. Autrement dit, le trou 9 communique avec la face supérieure 6 et avec aussi un évidement sensiblement conique défini dans la face inférieure 9. Cet évidement forme alors un cône 13 d'engagement de la pierre percée 8.

Dans la description, on parle de face supérieure et de face inférieure par rapport aux figures, notamment pour les distinguer. Néanmoins, les faces supérieure et inférieure peuvent être inversées.

On remarque également qu'une paroi interne du corps de cette pierre définie au niveau du trou 19 comporte une zone arrondie 14 destinée à minimiser le contact avec le pivot mais également à faciliter une éventuelle lubrification. On notera que la minimisation du contact avec le pivot permet notamment de diminuer les frottements avec le pivot.

La pierre biseautée 8 a en outre une face périphérique 15 en partie évasée, et reliant la face inférieure 12 de plus petite surface à la face supérieure 11 de plus grande surface. La partie évasée 16 est destinée à être en contact avec une paroi interne d'un bloc de palier de manière à absorber les chocs latéraux, la pierre pouvant glisser sur la paroi du bloc grâce à la paroi évasée, comme dans l'exemple de la figure 1.

La pierre 8 est, de préférence, formée à partir d'un corps minéral de type polycristallin, le corps comprenant par exemple du polyrubis de type al2O3Cr ou de la Zircone de type ZrO2.

Le procédé de fabrication 20 d'une telle pierre, qui est représenté sur la figure 3, comporte six étapes.

Une première étape 21 consiste à réaliser un précurseur à partir d'un mélange d'au moins un matériau en poudre avec un liant. Ce matériau peut être de manière non limitative et non exhaustive de la céramique. Cette étape est destinée à former un précurseur à partir d'une poudre à base de céramique prise dans le liant.

Dans ce contexte, la poudre à base de céramique peut comporter au moins un oxyde métallique, un nitrure métallique ou un carbure métallique. A titre d'exemple, la poudre à base de céramique peut comporter de l'oxyde d'aluminium afin de former du saphir synthétique ou un mélange d'oxyde d'aluminium et d'oxyde de chrome afin de former du rubis synthétique, ou encore de l'oxyde de zirconium. De plus, le liant peut être de natures variées comme, par exemple, de types polymères ou de types organiques.

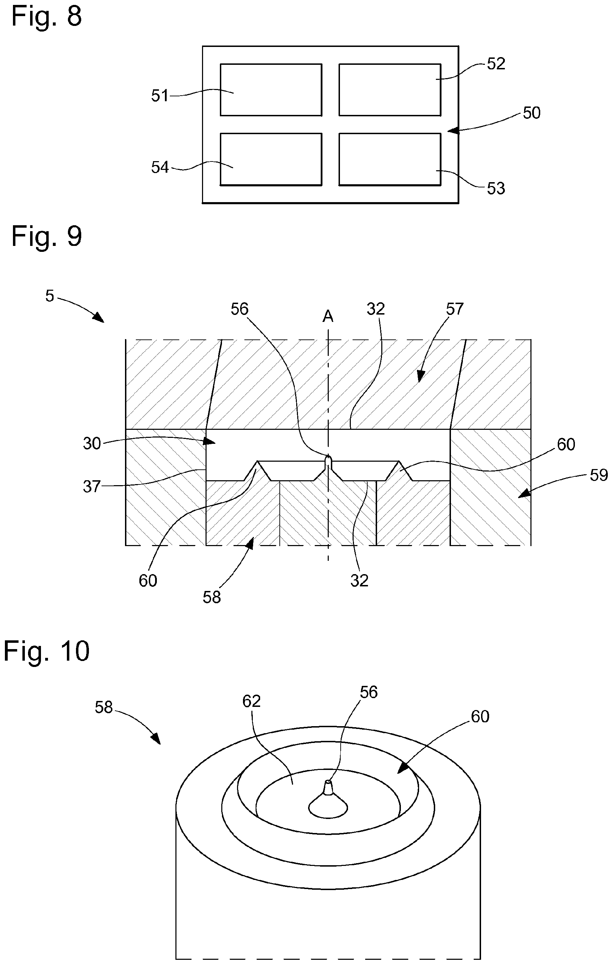

Le procédé comporte ensuite une deuxième étape de pressage 22 du précurseur à partir d'une matrice supérieure et d'une matrice inférieure d'un dispositif de pressage, représenté sur la figure 9, afin de former le corps vert de la future pierre.

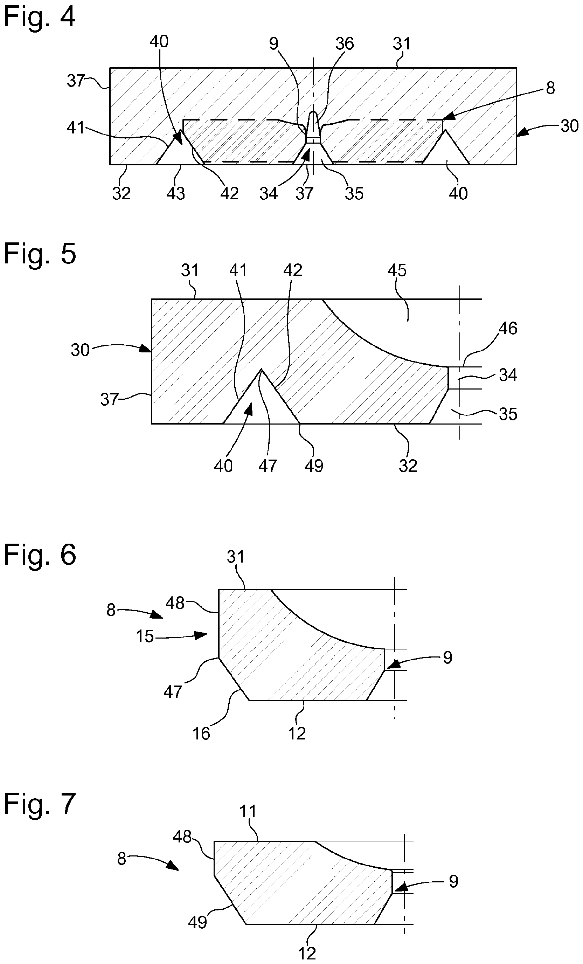

Le procédé comporte une troisième étape 23 de frittage du corps vert afin de former un corps 30 visible sur la figure 4 dans le matériau qui peut être ainsi que nous l'avons évoqué précédemment, de la céramique. Autrement dit, cette étape 23 est destinée à fritter le corps vert afin de former un corps 30 en céramique de la future pierre percée. Préférentiellement selon l'invention, l'étape de frittage 23 peut comporter une pyrolyse.

Selon l'invention, le corps 30 comprend une face périphérique 37 et une face inférieure 32 munie d'une rainure 40. La figure 4 montre le corps 30 de la pierre après l'étape de frittage, et la pierre finale 8 en surimpression obtenue à la fin du procédé de fabrication suite aux différentes étapes d'usinage du corps. Le corps comprend une face supérieure 31 et une face inférieure 32. Le corps 30 comprend de plus une ébauche de trou 34 pourvue des parties supérieure et inférieure 35, 36 qui sont de formes différentes. En effet, la partie inférieure 35, qui constitue l'ébauche de l'élément fonctionnel a une forme conique et la partie supérieure 36 qui comprend l'ébauche du trou 34 a une forme cylindrique. Un tel trou 34 comprend aussi une première ouverture 37 définie dans le corps 30 et débouchant dans la face inférieure 32 de ce corps 30.

On notera qu'une telle ébauche permet notamment de former le cône d'engagement 13 de la pierre 8 pour un montage plus aisé du pivot notamment lorsqu'il s'agit de le monter à l'aveugle dans la pierre percée formant dans cet exemple un élément de guidage. On comprend donc que la forme du trou traversant 9 est apportée par la forme d'un poinçon de la matrice inférieure du dispositif de pressage. Ainsi, une telle étape de pressage 22 du dispositif de la figure 3, est destinée à compresser, à l'aide de la matrice supérieure et la matrice inférieure, le précurseur afin de former ledit corps vert de la future pierre 8.

Selon l'invention, le corps 30 de la figure 4 comprend une rainure 40 sur sa face inférieure 32. La rainure 40 décrit, de préférence, un chemin circulaire centré autour de l'ébauche de trou 34. La rainure 40 a, de préférence, une section de forme sensiblement triangulaire. Néanmoins, d'autres formes sont possibles, et peuvent par exemple être légèrement convexes ou concaves. Comme le montre la figure, le diamètre du chemin circulaire de la rainure 40 détermine la largeur de la pierre finale.

La rainure 40 est circulaire et centrée sur la face inférieure de la pierre. La rainure a une section sensiblement triangulaire. La rainure comprend une face interne 41 et une face externe 42 formant les deux arêtes de sa section triangulaire, la troisième arête 43 étant ouverte sur la face inférieure du corps. La face interne 41 formera la partie évasée de la face périphérique, tandis que la face externe 42 sera éliminée par la suite. La périphérie de la pierre finale est définie par la rainure 40. La rainure 40 est formée par la matrice inférieure du dispositif de pressage, représenté sur les figures 9 et 10, la matrice inférieure comportant une forme en négatif de la rainure 40, telle une nervure saillante annulaire.

Sur la figure 3, le procédé 20 comprend une quatrième étape d'usinage 24 du corps 30 de la future pierre 8 de la figure 4. La quatrième étape 24 comporte une première sous-étape de creusement d'une creusure 45 dans la face supérieure 31 du corps 30. La creusure 45 est, de préférence, sensiblement hémisphérique, comme on peut le voir sur la figure 5. Lors du déroulement de cette sous étape, une ouverture 46 est réalisée dans l'ébauche du trou 34 permettant de relier le cône de la partie inférieure 35 à la creusure 45. L'ébauche du trou 34 comprend ainsi une seconde ouverture 46 définie dans le corps et débouchant dans la face supérieure 31 de ce corps 30.

L'étape d'usinage 24 comprend aussi une deuxième sous-étape de tournage pour raboter la paroi périphérique 37 du corps 30. Comme le montre la figure 6, on enlève de la matière, de préférence jusqu'au sommet 47 de la rainure de manière à obtenir une paroi périphérique 15 au moins en partie évasée 16. Ainsi, la face externe 41 est éliminée lors du rabotage. En revanche, la face interne 42 est conservée de manière à former la partie évasée 16 de la face périphérique 15 de la future pierre. La partie évasée 16 s'étend depuis la face inférieure 12 de la pierre 8. Une autre partie 48 de la paroi périphérique 15 est sensiblement droite et relie la partie évasée 16 de à la face supérieure 31, de préférence depuis le sommet 47 de la rainure 40. Cette partie 48 sensiblement droite a été formée lors du rabotage du corps 30. Les dimensions de la face inférieure 12 de la pierre 8 sont déterminées par la rainure 40, en particulier par la jonction 49 de la face interne 42 à la face inférieure 32 du corps 30.

Selon une variante non représentée, la face périphérique peut être entièrement évasée. Dans ce cas, la partie évasée s'étend depuis la face inférieure de plus petit diamètre, jusqu'à la face supérieure de plus grand diamètre.

L'étape d'usinage 24 comprend encore une troisième sous étape de taille de la face supérieure 31 du corps 30, afin d'obtenir une face supérieure 11 donnant à la pierre 8 une épaisseur prédéterminée, telle que celle représentée sur la figure 7. On choisit l'épaisseur de la pierre 8 en fonction de la configuration du bloc de palier.

L'étape d'usinage 24 est préférentiellement réalisée à l'aide d'un rayonnement destructif du type laser afin d'obtenir une gravure très précise. Toutefois, cette étape 24 peut être obtenue à l'aide d'autres types de processus comme, par exemple, un retrait mécanique tel qu'un perçage mécanique ou une découpe à eau haute pression.

Enfin, une cinquième étape 25 de finition permet de donner à la pierre 8 un état de surface compatible avec son utilisation. Une telle étape de finition 25 peut ainsi comporter un rodage et/ou un brossage et/ou un polissage permettant l'ajustage des cotes finales et/ou le retrait d'arêtes et/ou la modification locale de la rugosité. On cherche par exemple à obtenir un état de surface Ra=0.025µm. Une telle étape de finition 25 peut ainsi comporter un rodage et/ou un brossage et/ou un polissage permettant l'ajustage des cotes finales et/ou le retrait d'arêtes et/ou la modification locale de la rugosité.

En référence à la figure 8, l'invention porte aussi sur un système de fabrication 50 de la pierre. Ce système 50 comprend les différents dispositifs suivants :
- un dispositif de réalisation 51 d'un précurseur à partir d'un mélange d'au moins un matériau en poudre avec un liant ;
- un dispositif de pressage 52 du matériau précurseur comprenant des matrices supérieure et inférieure 57, 58 agencées mobiles dans un carter 59 contribuant à former un corps vert de la future pierre 8 ;
- un dispositif de frittage 53 dudit corps vert, et
- un dispositif d'usinage 54 du corps 30 de la future pierre 8 issu du frittage du corps vert.

On notera qu'au moins deux de ces dispositifs 51 à 54 peuvent former ensemble une même entité du système 50. Un tel système 50 est apte à mettre en oeuvre un procédé de fabrication de la pierre 8 représentée sur la figure 2 en passant par les étapes des figures 4 à 7.

Dans le dispositif de pressage 52 visible sur les figures 9 et 10, chaque matrice 57, 58 est fixée sur une presse double effet. Selon l'invention, une des matrices 57, 58 (ou les deux) est rapprochée de l'autre selon les directions A dans le carter 59 de ce dispositif de pressage 52 afin de former non seulement des faces supérieure et inférieure 31, 32 d'un corps 30 de la future pierre 8, mais également la face périphérique 37 de ce corps 30. Dans ce dispositif de pressage 52, les matrices 57, 58 sont sensiblement planes et la matrice inférieure 58 comporte un poinçon 56 destiné à former une cavité borgne 34 dans le corps 30. Ce poinçon 56 comprend une partie principale ayant une forme conique et une partie distale essentiellement cylindrique qui est pourvue d'une pointe. La partie principale et la partie distale sont destinées à former respectivement la partie inférieure 35 et la partie supérieure 36 de la cavité borgne 34.

Selon l'invention, la matrice inférieure 58 comporte en outre une nervure saillante 60 configurée pour former la rainure 40 sur la face inférieure 32 du corps 30. La nervure saillante 60 est, de préférence, circulaire et centrée sur la matrice inférieure 58. La nervure saillante 60 a des dimensions et une forme correspondant à celles de la rainure 40, car c'est elle qui forme la rainure 40 dans la face inférieure du corps 30. Ainsi, la nervure saillante 60 a également, de préférence, une section sensiblement triangulaire. La matrice inférieure 58 comprend une face 62 délimitée par la nervure saillante 60 et correspondant aux dimensions de la face inférieure 12 de la pierre 8. Lors du pressage, la matrice inférieure 58 munie du poinçon 56 et de la nervure saillante 60, imprime la face inférieure 32 du corps 30 de ses formes. Grâce à ce système 50, on obtient le corps vert souhaité, qui est fritté par la suite pour former le corps 30, qui permettra d'aboutir à la pierre 8 après usinage.

Bien entendu, la présente invention ne se limite pas à l'exemple illustré mais est susceptible de diverses variantes et modifications qui apparaîtront à l'homme de l'art. En particulier, d'autres types d'éléments fonctionnels formés par d'autres géométries de nervures saillantes et/ou de matrices 57, 58 peuvent être envisagés avantageusement selon l'invention, sans sortir du cadre défini par les revendications annexées.

## Revendications

1. Procédé de fabrication (20) d'une pierre biseautée (8) pour une pièce d'horlogerie, comportant les étapes suivantes :
- réalisation (21) d'un précurseur à partir d'un mélange d'au moins un matériau en poudre avec un liant ;
- pressage (22) du précurseur afin de former un corps vert, à l'aide d'une matrice supérieure (57) et d'une matrice inférieure (58) comprenant une nervure saillante (60),
- frittage (23) dudit corps vert afin de former un corps (30) de la future pierre (8) dans ledit au moins un matériau, le corps (30) comprenant une face périphérique (37) et une face inférieure (32) munie d'une rainure (40), la rainure (40) comprenant une paroi interne (42), et
- usinage (24) du corps (30) comportant une sous-étape de rabotage de la face périphérique (37) jusqu'à la rainure (40), de manière à ce que la paroi interne (42) de la rainure forme au moins une partie évasée (16) de la face périphérique (15) de la pierre (8).

2. Procédé selon la revendication précédente, **caractérisé en ce que** l'usinage (24) comprend une sous-étape de creusement d'une creusure (45) dans la face supérieure (31) du corps (30).

3. Procédé selon l'une, quelconque, des revendications précédentes, **caractérisé en ce que** l'usinage comprend une sous-étape de taille de la face supérieure (31) du corps (30), afin d'obtenir une face supérieure (11) donnant à la pierre (8) une épaisseur prédéterminée.

4. Procédé selon l'une, quelconque, des revendications précédentes, **caractérisé en ce que** le pressage (22) comprend le creusement d'une ébauche (34) de trou au moyen d'un poinçon (56) de la matrice inférieure (58).

5. Procédé selon l'une, quelconque, des revendications précédentes, **caractérisé en ce que** la rainure (40) est réalisée de manière être circulaire et/ou centrée sur la face inférieure (32) du corps (30).

6. Procédé selon l'une, quelconque, des revendications précédentes, **caractérisé en ce que** la nervure saillante (60) et la rainure (40) ont une section sensiblement triangulaire dont l'un des côtés formera la partie évasée (16) de la face périphérique (15) de la pierre (8), après le rabotage.

7. Procédé selon l'une, quelconque, des revendications précédentes, **caractérisé en ce que** la rainure (40) comprend une face interne (42) et une face externe (41), la face externe (41) étant éliminée lors du rabotage.

8. Procédé selon la revendication précédente, **caractérisé en ce que** la face interne (42) est conservée lors du rabotage de manière à former la partie évasée (16) de la face périphérique (15).

9. Procédé selon l'une des revendications précédentes, **caractérisé en ce que** l'étape pressage (22) est réalisée par rapprochement des matrices supérieure et inférieure (57, 58) dans un carter (59).

10. Procédé selon l'une des revendications précédentes, **caractérisé en ce que** l'étape de frittage (23) comporte une pyrolyse.

11. Procédé selon l'une des revendications précédentes, **caractérisé en ce qu'**il comporte une étape de finition (25) de la pierre (8), par exemple un rodage et/ou un brossage et/ou un polissage.

12. Procédé selon l'une des revendications précédentes, **caractérisé en ce que** le matériau en poudre est à base de céramique et comporte au moins un oxyde métallique, un nitrure métallique ou un carbure métallique.

13. Procédé selon la revendication précédente, **caractérisé en ce que** le matériau en poudre à base de céramique comporte de l'oxyde d'aluminium.

14. Procédé selon la revendication précédente, **caractérisé en ce que** le matériau en poudre à base de céramique comporte en outre de l'oxyde de chrome.

15. Système de fabrication (50) d'une pierre (8) biseautée pour une pièce d'horlogerie, le système mettant en oeuvre le procédé selon l'une des revendications 1 à 14, le système comprenant :
- un dispositif de réalisation (51) d'un précurseur à partir d'un mélange d'au moins un matériau en poudre avec un liant ;
- un dispositif de pressage (52) du précurseur comprenant des matrices supérieure et inférieure (57, 58) agencées mobile dans un carter (59) contribuant à former un corps vert de la future pierre (8), la matrice inférieure (58) comprenant une nervure saillante (60) ;
- un dispositif de frittage (53) dudit corps vert pour former un corps (30) de la future pierre ; et
- un dispositif d'usinage (54) dudit corps (30) de la future pierre (8), ledit dispositif étant agencé pour raboter la face périphérique du corps (30).

16. Système selon la revendication précédente, **caractérisé en ce que** la nervure saillante (60) est sensiblement circulaire et/ou centrée sur la matrice inférieure (58).

17. Système selon la revendication 15 ou 16, **caractérisé en ce que** la nervure saillante (60) a une section sensiblement triangulaire.

## Patentansprüche

1. Verfahren (20) zur Herstellung eines abgeschrägten Steins (8) für ein Zeitmessgerät, das die folgenden Schritte umfasst:
- Herstellen (21) eines Vorläufers aus einer Mischung aus mindestens einem pulverförmigen Material und einem Bindemittel;
- Pressen (22) des Vorläufers zum Bilden eines Grünkörpers mithilfe einer oberen Matrize (57) und einer unteren Matrize (58), die eine vorstehende Rippe (60) umfasst,
- Sintern (23) des Grünkörpers, um einen Körper (30) des zukünftigen Steins (8) aus dem mindestens einen Material zu bilden, wobei der Körper (30) eine Umfangsfläche (37) und eine Unterseite (32), die mit einer Nut (40) versehen ist, umfasst, wobei die Nut (40) eine Innenwand (42) umfasst, und
- Bearbeiten (24) des Körpers (30), umfassend einen Unterschritt des Hobelns der Umfangsfläche (37) bis zur Nut (40), derart, dass die Innenwand (42) der Nut mindestens einen ausgeschnittenen Teil (16) der Umfangsfläche (15) des Steins (8) bildet.

2. Verfahren nach dem vorhergehenden Anspruch, **dadurch gekennzeichnet, dass** das Bearbeiten (24) einen Unterschritt des Aushöhlens einer Vertiefung (45) in der oberen Fläche (31) des Körpers (30) umfasst.

3. Verfahren nach einem der vorhergehenden Ansprüche, **dadurch gekennzeichnet, dass** das Bearbeiten einen Unterschritt des Schleifens der Oberseite (31) des Körpers (30) umfasst, um eine Oberseite (11) zu erhalten, die dem Stein (8) eine vorbestimmte Dicke verleiht.

4. Verfahren nach einem der vorhergehenden Ansprüche, **dadurch gekennzeichnet, dass** das Pressen (22) das Aushöhlen eines Lochrohlings (34) mittels eines Stempels der unteren Matrize (58) umfasst.

5. Verfahren nach einem der vorhergehenden Ansprüche, **dadurch gekennzeichnet, dass** die Nut (40) kreisförmig und/oder zentriert auf der Unterseite (32) des Körpers (30) ist.

6. Verfahren nach einem der vorhergehenden Ansprüche, **dadurch gekennzeichnet, dass** die vorstehende Rippe (60) und die Nut (40) einen im Wesentlichen dreieckigen Querschnitt haben, wovon eine der Seiten den ausgeschnittenen Teil (16) der Umfangsfläche (15) des Steins (8) nach dem Hobeln bilden wird.

7. Verfahren nach einem der vorhergehenden Ansprüche, **dadurch gekennzeichnet, dass** die Nut (40) eine Innenfläche (42) und eine Außenfläche (41) aufweist, wobei die Außenfläche (41) beim Hobeln entfernt wird.

8. Verfahren nach dem vorhergehenden Anspruch, **dadurch gekennzeichnet, dass** die Innenfläche (42) beim Hobeln beibehalten wird, derart, dass der ausgeschnittene Teil (16) der Umfangsfläche (15) gebildet wird.

9. Verfahren nach einem der vorhergehenden Ansprüche, **dadurch gekennzeichnet, dass** der Pressschritt (22) durch Annäherung der oberen Matrize (57) und der unteren Matrize (58) in einem Gehäuse (59) durchgeführt wird.

10. Verfahren nach einem der vorhergehenden Ansprüche, **dadurch gekennzeichnet, dass** der Sinterschritt (23) eine Pyrolyse umfasst.

11. Verfahren einem der vorhergehenden Ansprüche, **dadurch gekennzeichnet, dass** es einen Schritt zur Endbearbeitung (25) des Steins (8), beispielsweise ein Läppen und/oder ein Bürsten und/oder Polieren, umfasst.

12. Verfahren einem der vorhergehenden Ansprüche, **dadurch gekennzeichnet, dass** das pulverförmige Material auf Keramikbasis ist und mindestens ein Metalloxid, ein Metallnitrid oder ein Metallcarbid enthält.

13. Verfahren nach dem vorhergehenden Anspruch, **dadurch gekennzeichnet, dass** das pulverförmige Material auf Keramikbasis Aluminiumoxid enthält.

14. Verfahren nach dem vorhergehenden Anspruch, **dadurch gekennzeichnet, dass** das pulverförmige Material auf Keramikbasis zusätzlich Chromoxid enthält.

15. System (50) zur Herstellung eines abgeschrägten Steins (8) für ein Zeitmessgerät, wobei das System das Verfahren nach einem der Ansprüche 1 bis 14 durchführt und wobei das System Folgendes umfasst:
- eine Vorrichtung (51) zur Herstellung eines Vorläufers aus einer Mischung aus mindestens einem pulverförmigen Material und einem Bindemittel;
- eine Vorrichtung (52) zum Pressen des Vorläufers, die eine obere und eine untere Matrize (57,58) umfasst, die beweglich in einem Gehäuse (59) angeordnet sind, was dazu beiträgt, einen Grünkörper des zukünftigen Steins (8) zu bilden, wobei die untere Matrize (58) eine vorstehende Rippe (60) umfasst;
- eine Vorrichtung (53) zum Sintern des Grünkörpers, um einen Körper (30) des zukünftigen Steins zu bilden; und
- eine Vorrichtung (54) zur Bearbeitung des Körpers (30) des zukünftigen Steins (8), wobei die Vorrichtung dafür ausgelegt ist, die Umfangsfläche des Körpers (30) zu hobeln.

16. System nach dem vorhergehenden Anspruch, **dadurch gekennzeichnet, dass** die vorstehende Rippe (60) im Wesentlichen kreisförmig und/oder auf die untere Matrize (58) zentriert ist.

17. System nach Anspruch 15 oder 16, **dadurch gekennzeichnet, dass** die vorstehende Rippe (60) einen im Wesentlichen dreieckigen Querschnitt hat.

## Claims

1. Method for manufacturing (20) a bevelled stone (8), for a timepiece, including the following steps:
- producing (21) a precursor from a mixture of at least one material in powder form with a binder;
- pressing (22) the precursor so as to form a green body, using a top die (57) and a bottom die (58) comprising a protruding rib (60),
- sintering (23) said green body so as to form a body (30) of the future stone (8) in said at least one material, the body (30) comprising a peripheral face (37) and a bottom face (32) provided with a groove (40), the groove (40) comprising an inner wall (42), and
- machining (24) the body (30) including a substep of planing the peripheral face (37) up to the groove (40), such that the inner wall (42) of the groove forms at least a flared part (16) of the peripheral face (15) of the stone (8).

2. Method according to the preceding claim, **characterised in that** the machining (24) comprises a substep of recessing a recess (45) in the top face (31) of the body (30).

3. Method according to any one of the preceding claims, **characterised in that** the machining comprises a substep of cutting the top face (31) of the body (30), in order to obtain a top face (11) giving the stone (8) a predetermined thickness.

4. Method according to any one of the preceding claims, **characterised in that** the pressing (22) comprises the recessing of a hole blank (34) by means of a punch (56) of the bottom die (58).

5. Method according to any one of the preceding claims, **characterised in that** the groove (40) is embodied to be circular and/or centred on the bottom face (32) of the body (30).

6. Method according to any one of the preceding claims, **characterised in that** the protruding rib (60) and the groove (40) have a substantially triangular cross-section, one of the sides whereof will form the flared part (16) of the peripheral face (15) of the stone (8), after planing.

7. Method according to any one of the preceding claims, **characterised in that** the groove (40) comprises an inner face (42) and an outer face (41), the outer face (41) being removed during planing.

8. Method according to the preceding claim, **characterised in that** the inner face (42) is retained during planing so as to form the flared part (16) of the peripheral face (15).

9. Method according to one of the preceding claims, **characterised in that** the pressing step (22) is carried out by moving the top and bottom dies (57, 58) closer together in a casing (59).

10. Method according to one of the preceding claims, **characterised in that** the sintering step (23) includes pyrolysis.

11. Method according to one of the preceding claims, **characterised in that** it includes a step of finishing (25) the stone (8), for example lapping and/or brushing and/or polishing.

12. Method according to one of the preceding claims, **characterised in that** the material in powder form is ceramic-based and includes at least a metal oxide, a metal nitride or a metal carbide.

13. Method according to the preceding claim, **characterised in that** the ceramic-based material in powder form includes aluminium oxide.

14. Method according to the preceding claim, **characterised in that** the ceramic-based material in powder form further includes chromium oxide.

15. System for manufacturing (50) a bevelled stone (8) for a timepiece, the system using the method according to one of claims 1 to 14,the system comprising :
- a device for producing (51) a precursor from a mixture of at least one material in powder form with a binder;
- a device for pressing (52) the precursor comprising top and bottom dies (57, 58) arranged movable in a casing (59) helping form a green body of the future stone (8), the bottom die (58) comprising a protruding rib (60);
- a device for sintering (53) said green body to form a body (30) of the future stone ; and
- a device for machining (54) said body (30) of the future stone (8), said device being arranged to planing the peripheral face of the body (30).

16. System according to the preceding claim, **characterised in that** the protruding rib (60) is substantially circular and/or centred on the bottom die (58).

17. System according to claim 15 or 16, **characterised in that** the protruding rib (60) has a substantially triangular cross-section.
